**Europäisches Patentamt**

**European Patent Office**

**Office européen des brevets**

(19)

(11) Publication number: **0 037 623**
**A2**

(12)

# EUROPEAN PATENT APPLICATION

(21) Application number: **81300529.5**

(22) Date of filing: **10.02.81**

(51) Int. Cl.³: **G 02 B 7/10**

(30) Priority: **18.02.80 JP 18806/80**

(43) Date of publication of application:
**14.10.81 Bulletin 81/41**

(84) Designated Contracting States:
**DE FR GB**

(71) Applicant: KABUSHIKI KAISHA SANKYO SEIKI
SEISAKUSHO
5329, Shimosuwa-machi
Suwa-gun Nagano-ken(JP)

(72) Inventor: Katsuhide, Takagi
No. 6211-1, Osachi
Okaya-shi Nagano(JP)

(72) Inventor: Shigeki, Sugihara
No. 40-1, Osachi
Okaya-shi Nagano(JP)

(74) Representative: Cooper, Derek Robert et al,
MARKS & Clerk Alpha Tower ATV Centre
Birmingham B1 1TT(GB)

(54) Zoom lens having barrel components which can be moulded from plastics material.

(57) A zoom barrel 3 surrounds and is rotatable relative to a fixed main barrel 2 to vary the focal length of the zoom lens. Such rotation of the zoom barrel 3 causes a variator lens group 8a supported by a moving barrel 8 and a compensator lens group 6a supported by a sleeve 5 to move axially relative to the main barrel 2. The sleeve 5 is provided with pins 7 which are slidably received in respective guide grooves 3a in the zoom barrel 3, arcuate guide grooves 5b which slidably receive respective pins 8' on the main barrel 2, and axial guide slots 5c which slidably receive respective tab portions 10 on the moving barrel 8. Each groove 5b is axially interposed between a respective one of the pins 7 and a respective one of the guide slots 5c, with the centres of these parts being disposed on a common straight line parallel to the optical axis ℓ.

FIG. 1

This invention relates to a zoom lens wherein the magnification ratio is continuously variable.

Typically, a zoom lens of this type comprises a main barrel which is non-rotatable and which is secured to a camera or a projector in use, and a zoom barrel which surrounds the main barrel and which is rotated relative thereto to vary the focal length of the lens. A variator lens group is supported by a moving barrel and a compensator lens group is supported by a sleeve, both the moving barrel and the sleeve being moved axially of the main barrel as the zoom barrel is rotated. The variator lens group is moved linearly along the optical axis (i.e. its position is directly related to the focal length setting), while the compensator group is moved non-linearly in order to maintain the position of the image plane constant. Such non-linear movement of the compensator group is achieved by curved guide grooves which are concave in the direction of the optical axis. Typically, a U-shaped groove is provided in an outer peripheral surface of the sleeve which supports the compensator lens group.

In ordinary movie cameras and motion-picture projectors, it has previously been the custom to use zoom lenses whose barrels are made of metal. Recently, however, there has been a tendency for these metal barrels to be replaced by ones made of a mouldable material, such as plastics. Unfortunately, it is very difficult to mould the supporting sleeve for the compensator lens group from plastics material due to the presence of the aforementioned U-shaped groove.

Moreover, in conventional zoom lenses the moving barrel which supports the variator lens group is moved by a plurality of metallic bars extending along the optical axis, which makes the lens heavy and hence difficult to handle. In addition, it is difficult to manufacture a barrel for such a lens.

It is an object of the present invention to provide a zoom lens in which the sleeve which supports the compensator lens group is so constructed that it can be moulded from plastics material, thereby enabling the lens to be made light in weight and the manufacture and assembly thereof to be simplified.

According to the present invention, this object is achieved by providing the sleeve with at least one pin which is slidably engaged with a respective axial guide groove in the zoom barrel, at least one arcuate guide groove in which is slidably engaged a respective pin on the main barrel, and at least one axial guide slot which is slidably engaged by a respective formation on the moving barrel, the or each arcuate guide groove being interposed in the axial direction between the pin or a respective one of the pins and the guide slot or a respective one of the guide slots.

The invention will now be further described, by way of example, with reference to the accompanying drawings, in which:-

Figure 1 is an axial cross-sectional view of a zoom lens according to the present invention;
Figure 2 is an axial cross-sectional view of a main barrel which forms part of the zoom lens shown in Figure 1;
Figure 3 is a rear view of the main barrel;
Figure 4 is an axial cross-sectional view of a zoom barrel which forms part of the zoom lens shown in Figure 1;
Figure 5 is a section taken along the line A-A in Figure 4;
Figure 6 is a front view of a rubber ring which forms part of the zoom lens shown in Figure 1;

Figure 7 is a side view of the rubber ring;

Figure 8 is an axial cross-sectional view of a rotary sleeve which forms part of the zoom lens shown in Figure 1;

Figure 9 is a developed view of part of the rotary sleeve;

Figure 10 is a front view of a fixing plate which forms part of the zoom lens shown in Figure 1;

Figure 11 is a front view of a moving barrel which forms part of the zoom lens shown in Figure 1;

Figure 12 is a section taken along the line B-B in Figure 11; and

Figure 13 is a graph illustrating the loci of compensator and variator lens groups as the focal length of the zoom lens is varied.

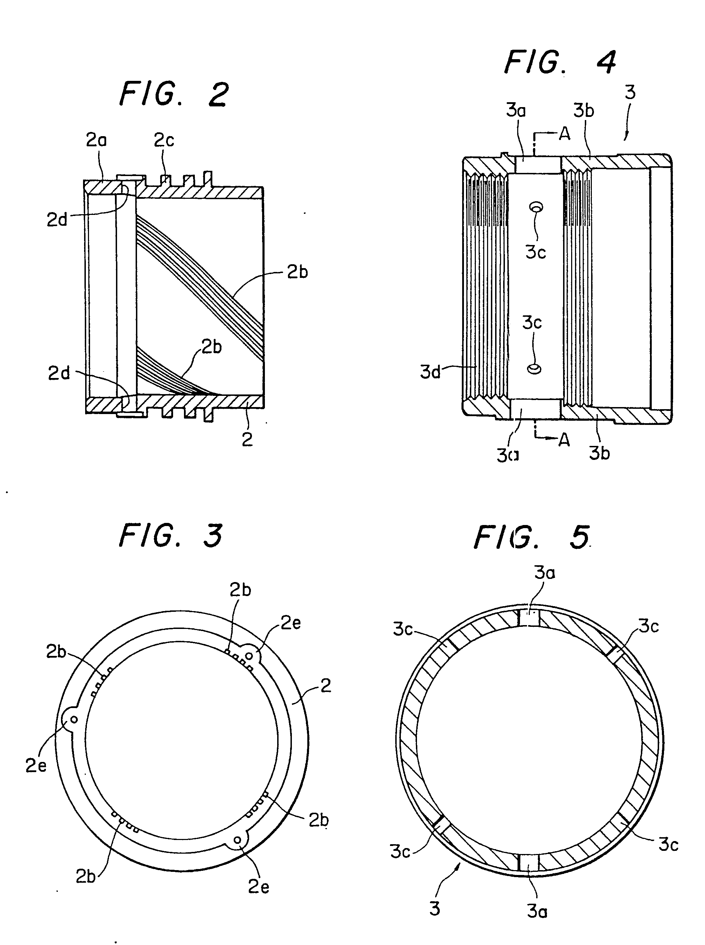

Referring to the drawings, the zoom lens comprises a tubular main barrel 2 which is adapted for securement to a front frame 1 of a camera such that its axis is coincident with the optical axis $l$ of the latter. The main barrel 2 is shown in detail in Figures 2 and 3. A spiral guide groove 2a is formed in the outer surface of the main barrel 2 adjacent a front end thereof, and a plurality of guide grooves 2b extending along the optical axis are formed in the inner surface of the main barrel 2 adjacent a rear end thereof. In the embodiment shown, four such guide grooves 2b are provided. Between the spiral guide groove 2a and a guide surface 2c are formed two bores 2d for holding guide pins (to be described later). As shown in Figure 3, three screw holes 2e are formed in the main barrel 2 for securing the main barrel 2 to the front frame.

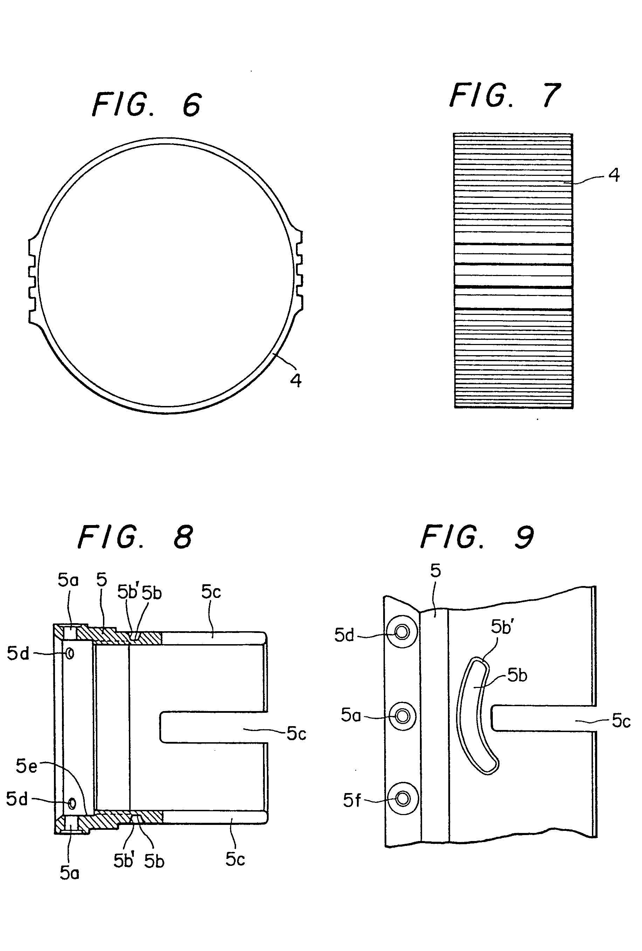

A zoom barrel 3 is rotatably mounted on the outer surface of the main barrel 2 at the front end thereof. As best shown in Figures 4 and 5, a pair of guide slots 3a extending in the direction of the optical axis are formed diametrically opposite one another in the zoom barrel 3. The guide slots 3a are covered by a decorative rubber sleeve 4 fitted into an annular recess 3b formed in the outer surface of the zoom barrel 3, the rubber sleeve 4 being shown in detail in Figures 6 and 7. In Figures 4 and 5, there are shown four holes 3c through which a driver or an adjustment tool can be inserted inwardly, for a purpose to be explained later.

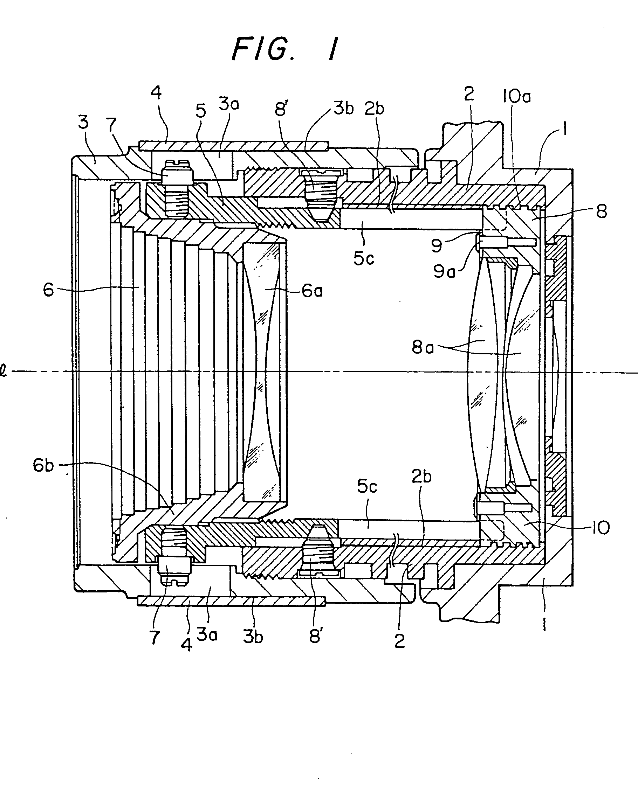

Reference numeral 5 denotes a rotary sleeve which, as shown in Figures 8 and 9, is provided with a pair of pin-holding bores 5a, a pair of arc-shaped grooves 5b, guide slots 5c extending along the optical axis, screw and access holes 5f holes 5d/ As best seen in Figure 9, each arc-shaped groove 5b is axially interposed between a respective one of the pin-holding bores 5a and a respective one of the guide slots 5c. This enables the rotary sleeve 5 to be manufactured by moulding from plastics material since, as will be apparent to one of ordinary skill in the art of plastics moulding, it is possible to remove the moulding die readily from such a form. As shown in Figures 8 and 9, slanted surfaces 5b' are formed in the arc-shaped grooves 5b thereby enabling the groove to extend for up to 120° of the rotational angle of the rotary sleeve 5. A support frame 6 (see Figure 1) carrying a compensator lens group 6a which moves in a non-linear manner is mounted inside the rotary sleeve 5 and held in position there by the aforementioned set screws in the holes 5d.

In order to set the focus of the lens during its assembly, the following procedure is used. Namely, after the zoom barrel 3 has been mounted on the main barrel 2, the support frame 6 is inserted into the rotary sleeve 5. The focus adjustment is then carried out by loosening the set screws in the holes 5d, contacting a standard surface 6b on the support frame 6 with a standard surface 5e on the rotary sleeve 5, and moving the support frame 6 and rotary sleeve 5 relative to one another with a driver tool (not shown) inserted through one of the holes 3c in the zoom barrel 3 and corresponding access hole 5f until the correct focus position is atained. The holes 3c also enable access to be gained to the set screws in the holes 5d so that the support frame 6 can subsequently be secured in position on the sleeve 5. The rubber sleeve 4 is attached after the focus adjustment has been completed, and covers the holes 3c as well as the slots 3a as aforesaid.

Projecting pins 7 are secured in the bores 5a in the rotary sleeve 5 and are slidably engaged with the guide slots 3a in the zoom barrel 3. Also, each arc-shaped groove 5b slidably receives a guide pin 8' fixed in a respective one of the bores 2d in the main barrel 2.

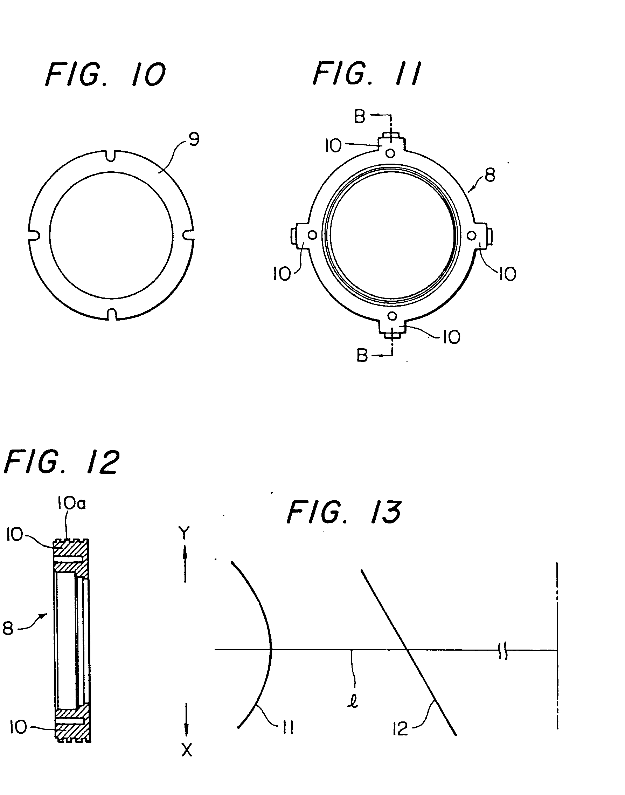

A variator lens group 8a is mounted on a moving barrel 8 in such a manner as to be movable linearly. In Figures 1 and 10, a retaining plate for the variator lens group is designated by reference numeral 9, and small screws for securing the retaining plate to the moving barrel 8 are designated by reference characters 9a. As shown in Figures 11 and 12, each tab 10 is formed with plural spiral threads 10a which engage with the spiral groove 2b formed in the main barrel 2. The tabs 10 also engage in the guide slots 5c, respectively, so that the barrel 8 can move axially along the inner surface of the main barrel 2 at the rear thereof.

The operation of the zoom lens thus constructed will now be described. Figure 1 shows the zoom lens at the telephoto end of its zoom range. In this position, the zoom barrel 3 is rotatable in one direction only. Since the projecting pins 7 are engaged with the guide slots 3a respectively, rotation of the zoom barrel 3 in said one direction causes the rotary sleeve 5 to rotate in the same direction also. At the same time, since the guide pins 8' are engaged with the arc-shaped grooves 5b, the rotary sleeve 5 is moved in the axial direction with its movement being defined by the shape of the grooves 5b.   In other words, as indicated in Figure 13, the locus 11 of the rotary sleeve 5 coincides with the pattern of the arc-shaped grooves.   Since the tabs 10 on the moving barrel 8 are engaged with the guide slots 5c, the moving barrel 8 is rotated in the same direction as the rotary sleeve 5 and is guided by the spiral guide grooves 2b so that it is simultaneously moved in the axial direction, guided by the guide slots 5c.   Namely, the moving barrel 8 is moved along the rectilinear locus 12 shown in Figure 13.

The zoom lens is moved from the wide angle end to the telephoto end of its zoom range in the same manner *mutatis mutandis*, with the zoom barrel 3 being rotated in the opposite direction.

As mentioned above, the projecting pins 7 are engaged with the slots 3a in the zoom barrel 3, the arc-shaped grooves 5b have a slanted surface 5b' therealong, the guide slots engaged with the moving barrels are provided in a single element (namely the rotary sleeve 5 supporting the compensator lens group) and the arc-shaped grooves 5b are positioned between the projecting pins 7 and the guide slots 5c.   It is therefore possible to manufacture the lens barrel by moulding as an integral plastics member. This enables the zoom lens to be made light in weight, which leads to ease in its operation.

Moreover, an imaginary line connecting the centre of each projecting pin 7, the centre of the adjacent arc-shaped groove 5b and the centre of the adjacent guide slot 5c is parallel to the optical axis of the zoom lens, which leads to an enhancement of the optical accuracy. Also, since the guide slots 5c are formed in the rotary sleeve 5 to guide the moving barrel 8, there is no need to provide guide levers as is the case in prior art constructions.

C L A I M S :

1. A zoom lens comprising a tubular main barrel adapted for securement to a camera, projector or the like such that its axis is co-incident with the optical axis of the latter, a tubular zoom barrel co-axially surrounding at least a front end of the main barrel and rotatable relative thereto to vary the focal length of the lens, a moving barrel supporting a variator lens group, and a rotary sleeve coupled to the main barrel and supporting a compensator lens group, characterised in that the moving barrel (8) is rotatably supported on the main barrel (2) by means of a spiral groove (2b) in the inner surface of the main barrel (2) adjacent a rear end thereof, and the rotary sleeve (5) is provided with at least one guide pin (7) which is slidably engaged in a respective axial guide slot (3a) in the zoom barrel (3), at least one arc-shaped groove (5b) in which is slidably engaged a respective guide pin (8') on the main barrel (2), and at least one guide slot (5c), the or each arc-shaped groove (5b) being disposed between the guide pin (7) or a respective one of the guide pins and the guide slot (5c) or a respective one of the guide slots.

2. A zoom lens comprising a main, non-rotatable barrel, a zoom barrel surrounding the main barrel and rotatable relative thereto to vary the focal length of the lens, a moving barrel supporting a variator lens group, and a sleeve supporting a compensator lens group, the moving barrel and the sleeve being movable axially of the main barrel by rotation of the zoom barrel, characterised in that the sleeve (5) is provided with at least one pin (7) which is slidably engaged with a respective axial guide
groove (3a) in the zoom barrel (3), at least one arcuate
guide groove (5b) in which is slidably engaged a respective
pin (8') on the main barrel (2), and at least one axial
guide slot (5c) which is slidably engaged by a respective
formation (10) on the moving barrel (8), the or each
guide groove (5b) being interposed in the axial direction
between the pin (7) or a respective one of the pins
and the guide slot (5c) or a respective one of the guide
slots.

3.    A zoom lens as claimed in Claim 2, wherein the centre
of the or  each arcuate guide groove (5b) and the centres
of the respective pin (7) and guide slot (5c) are aligned
in a straight line.

4.    A zoom lens as claimed in Claim 2 or 3, wherein
the compensator lens group (6a) includes a support frame
(6) secured to the sleeve (5) by at least one set screw on
the latter.

5.    A zoom lens as claimed in Claim 4, wherein at least
one access hole (5f) is provided in the sleeve (5)
for positioning the support frame (6) relative to the sleeve
(5), and wherein holes (3c) are formed in the zoom barrel
(3) corresponding to the positions of the access holes (5f)
and the set screws.

6.    A zoom lens as claimed in Claim 5, wherein a rubber
sleeve (4) is disposed around at least a portion of the
zoom barrel (3) and covers the holes (3c) therein.

7.    A zoom lens as claimed in any one of Claims 2 to 6,
further comprising an annular retaining plate (9) fixing
the variator lens group (8a) to the moving barrel (8)
and a plurality of pins (9a) rigidly coupling the retaining
plate (9) to the moving barrel (8).

8.    A zoom lens as claimed in any one of Claims 2 to 7;
wherein the formations on the moving barrel (8) are
formed by a plurality of tab portions (10) extending
radially therefrom, the tab portions (10) having screw threads
(10a) on their outer surfaces which are engaged with
spiral threads (2b) formed on the main barrel (2).

9.    A zoom lens as claimed in any one of Claims 2 to 8,
wherein the or each arcuate guide groove (5b) has slanted
upper surfaces.

0037623

FIG. 1

FIG. 2

FIG. 4

FIG. 3

FIG. 5

FIG. 6

FIG. 7

FIG. 8

FIG. 9

FIG. 10

FIG. 11

FIG. 12

FIG. 13